Europäisches Patentamt

European Patent Office

Office européen des brevets

(11) Veröffentlichungsnummer: **0 266 792**
A2

# (12) EUROPÄISCHE PATENTANMELDUNG

(21) Anmeldenummer: 87116424.0

(22) Anmeldetag: 06.11.87

(51) Int. Cl.⁴: **E21B 33/138** , E21B 43/02 ,
C04B 28/06 , C04B 38/02 ,
E03B 3/15 ,
//(C04B28/06,7:02,22:04,24:30)

Die Bezeichnung der Erfindung wurde geändert (Richtlinien für die Prüfung im EPA, A-III, 7.3).

(30) Priorität: 07.11.86 DE 3637946

(43) Veröffentlichungstag der Anmeldung:
11.05.88 Patentblatt 88/19

(84) Benannte Vertragsstaaten:
AT BE CH DE ES FR GB GR IT LI LU NL SE

(71) Anmelder: **Zawisla GmbH & Co. KG**
**Rohr- und Kanalreinigungsservice**
**Industriestrasse 3**
**D-6729 Hatzenbühl(DE)**

(72) Erfinder: **Zawisla, Klaus**
**Raiffeisenring 6**
**D-6729 Hatzenbühl(DE)**

(74) Vertreter: **Görg, Klaus, Dipl.-Ing. et al**
**Hoffmann, Eitle & Partner Arabellastrasse 4**
**(Sternhaus)**
**D-8000 München 81(DE)**

(54) Verfahren und Mörtelzusammensetzung zum Sanieren eines Brunnens.

(57) Verfahren zum Sanieren eines Brunnens, insbesondere eines Trink-oder Brauchwasserbrunnens, bei dem ein bestimmter Mörtel nur in der Nähe der Schadstelle durch die bereits vorhandenen Wassereindringschlitze (18) in eine das Brunnenrohr umgebende Filterkiesschicht gegen den statischen Druck des eindringenden Grundwassers gepreßt wird.

EP 0 266 792 A2

## Verfahren zum Sanieren eines Brunnens

Die Erfindung bezieht sich auf ein Verfahren zum Sanieren eines Brunnens, insbesondere eines Trink-oder Brauchwasserbrunnens, indem eine Schadstelle festgestellt und anschließend die Sanierung der Schadstelle erfolgt. Außerdem bezieht sich die Erfindung auf einen Mörtel, insbesondere für die Verwendung bei der Durchführung dieses Verfahrens.

Trinkwasserbrunnen ragen bis zu einer beträchtlichen Tiefe in den Erdboden und bestehen aus einem Brunnenrohr, das von einer oder mehreren Filterkiesschichten umgeben ist. Im Brunnenrohr befinden sich über die Höhe, ggf. mit Unterbrechungen, Schlitze für das Eindringen des Grundwassers in das Innere des Brunnenrohres, so daß das eingedrungene Grundwasser mittels einer Pumpe nach oben gefördert werden kann. Diese Rohre bestehen üblicherweise nicht aus einem einzigen, homogenen, kontinuierlich gefertigten Rohr, sondern sind aus mehreren Bestandteilen aneinandergesetzt, wobei verschiedene Systeme verwendet werden. An den Stellen, wo die Rohrabschnitte aneinandergesetzt sind, kommt es häufig zu Brüchen und Verschiebungen. Durch die dabei entstehenden Leckstellen dringt der Filterkies in das Innere des Brunnenrohres und führt entweder zu einem Ansaugen von Sand zusammen mit dem Wasser und möglicherweise auch zu einer völligen Versandung, und somit zu einem Unbrauchbarwerden des Brunnens. Derartige Schäden können beispielsweise auch bei der Wartung des Pumpenaggregats erfolgen, indem durch harte Gegenstände ggf. Löcher in das Brunnenrohr geschlagen werden.

Durch das Eindringen von Filterkies in das Innere des Brunnenrohres kommt es zu einer Entleerung der Hinterfüllung und somit möglicherweise zu Einbrüchen an der Erdoberfläche.

Daher besteht ein Erfordernis, derartige Schäden zu beheben. Dies erfolgte bisher in erster Linie durch das Einbringen eines neuen Brunnenrohres kleineren Durchmessers über die gesamte Höhe des Brunnens mit dem Nachteil, daß hierdurch für eine evtl. kleine Schadstelle ein kostenerheblicher Aufwand getrieben wird. Außerdem muß das Pumpenaggregat an den neuen Durchmesser des Brunnens angepaßt werden. Eine derartige Sanierung ist im übrigen nur einmal durchführbar.

Daher besteht die Aufgabe der Erfindung darin, ein Verfahren zu schaffen, mit dem auf besonders einfache und kostengünstige Weise ohne Beeinträchtigung der Brunnenumgebung eine Sanierung von Beschädigungen des Brunnens vorgenommen werden kann.

Diese Aufgabe wird erfindungsgemäß dadurch gelöst, daß das Sanierungsmaterial nur in der Nähe der Schadstelle selbst durch die schon vorhandenen Wassereindringschlitze in die das Brunnenrohr umgebende Filterkiesschicht gegen den statischen Druck des eindringenden Grundwassers gepreßt wird.

Dadurch ist es auf einfache Weise möglich, mittels eines entsprechenden technischen Gerätes, beispielsweise einem Packer, den Schadstellenbereich in zwei Richtungen der Brunnenlängserstreckung abzudichten und dann in den entstehenden Ringraum das Sanierungsmaterial zuzuführen, so daß dieses gegen den Druck des eindringenden Grundwassers durch die genannten Schlitze in den Umgebungsbereich des Brunnenrohres und in die dort befindliche Filterkiesschicht eingetrieben werden kann. Durch Ausnutzung des Gegendrucks des eindringenden Grundwassers erfolgt eine besonders günstige Verteilung des eingepreßten Sanierungsmaterials zu einem homogenen Verbund mit der Kiesfilterschicht derart, daß praktisch in situ mit der Kiesfilterschicht eine Art Beton erstellt wird, der zwar das Eindringen von Grundwasser in das Innere des Brunnens an dieser begrenzten Stelle behindert, jedoch nicht vollständig verhindert, da die entstehende Materialschicht wasserdurchlässig bleibt.

Das Sanierungsmaterial wird nach dem Einpressen in die Filterkiesschicht aufgeschäumt, und zum Bremsen des Aufschäumvorganges wird eine Früherstarrung des Sanierungsmaterials eingeleitet, so daß ein den Filterkies einschließender, geschlossen-zelliger Feinstschaum entsteht, der ausreichend wasserdurchlässig ist, aber ein Eindringen von Filterkies durch die Schadstelle verhindert. Durch die Früherstarrung wird verhindert, daß das Material in der Filterkiesschicht sich nach unten absackt.

Vorzugsweise erfolgt das Aufschäumen vor der Früherstarrung und beides innerhalb von 60 Sekunden, damit einerseits eine ausreichende Festigkeit und andererseits ein homogener Verband erzielt wird, ohne daß das Material von der Schadstelle nach unten wegläuft.

Die Volumenvergrößerung beim Aufschäumen liegt vorzugsweise bei 1 Raumteil : 1 Raumteil.

Das Einpressen des Sanierungsmaterials und dessen Verbund mit der Filterkiesschicht erfolgt so, daß die entstandene Gesamtschicht noch wasserdurchlässig ist. Außerdem erfolgt sie so, daß die Gesamtschicht mit einer Druckfestigkeit von 0.5 $N/mm^2$ (0,5 MPa) biegeweicher ist als Beton.

Wenn das Aufschäumen des Sanierungsmaterials in großer Brunnentiefe gegen einen relativ hohen statischen Wasserdruck erfolgt, so wird am Ort in das Sanierungsmaterial ein Aufschäumkatalysator eingespült, der ein sekundenschnelles, gezieltes Aufschäumen gegen den Wasserdruck hervorruft. Insbesondere wird hier 3%-ige Perhydrollösung ($H_2O_2$) eingespült.

Von wesentlicher Bedeutung für die Durchführung des Verfahrens ist die Topfzeit, der Erstarrungsbeginn, das Aufschäumverhalten und die Festigkeit des Sanierungsmaterials. Die Topfzeit, der Erstarrungsbeginn und das Aufschäumverhalten des Sanierungsmaterials werden so eingestellt, daß das Sanierungsmaterial gut handhabbar ist, d.h. durch eine Pumpe und durch entsprechende Leitungen sowie die Brunnenschlitze gut fließen kann, aber die Erstarrung im Sinne einer Früherstarrung relativ kurzzeitig nach dem Einpressen in die Kiesfilterschicht und nach dem Aufschäumen beginnt, ohne daß das Aufschäumen durch das Erstarren behindert wird, aber auch ohne daß ein zu starkes Aufschäumen in Sinne einer grobporigen Schaumbildung erfolgt.

Zur Durchführung des Verfahrens wird ein Mörtel verwendet, wie er den Patentansprüchen 10 bis 15 zu entnehmen ist.

Der verwendete Tonerdeschmelzzement dient in erster Linie der Steuerung der Topfzeit und des Erstarrungsbeginns. Der Portlandzement fördert in erster Linie die Gesamtfestigkeit der sanierten Gesamthinterfüllungsschicht des Brunnenrohres. Das Aluminiumpulver dient im wesentlichen der Steuerung des Aufschäumverhaltens, wobei es von Bedeutung ist, daß ein retardiertes Aluminiumpulver verwendet wird. Das Melaminformaldehydharz ist eine besondere Art eines Verflüssigers, durch den es möglich ist, weniger Anmachwasser verwenden zu müssen und trotzdem die Mischung in einem Zustand zu halten, in dem diese in Pumpe und Leitungen leicht fließbar ist. Dieses Harz dient aber auch der Festigkeit der Gesamtschicht.

Der Zusammensetzungsbestandteil E kann ggf. weggelassen werden. Man bindet in diesem Falle den Filterkies, der am Objekt vorliegt, mit dem Gemisch der Zusammensetzungsbestandteile (A) bis (D).

Die jeweiligen Anteile der Zusammensetzungsbestandteile erfolgt in Abhängigkeit der jeweiligen Bedingungen und Zustände, d.h. insbesondere der Brunnentiefe bzw. dem Abstand der Sanierungsstelle von der Oberfläche des Brunnens. Je nach Einstellung beginnt nach einer bestimmten Zeit zwischen dem Aluminiumpulver und dem freiwerdenden $Ca(OH)_2$ aus dem Portlandzement eine Reaktion, die Wasserstoffgas freisetzt und das Gesamtgemisch auseinandertreibt.

Nach einem weiteren bestimmten Zeitablauf bewirkt der Tonerdeschmelzzement eine Früherhärtung, so daß das Gemisch nach dem Durchtritt durch die Schlitze des Brunnenrohres erstarrt.

Die Erfindung wird nachfolgend anhand eines Ausführungsbeispiels näher erläutert.

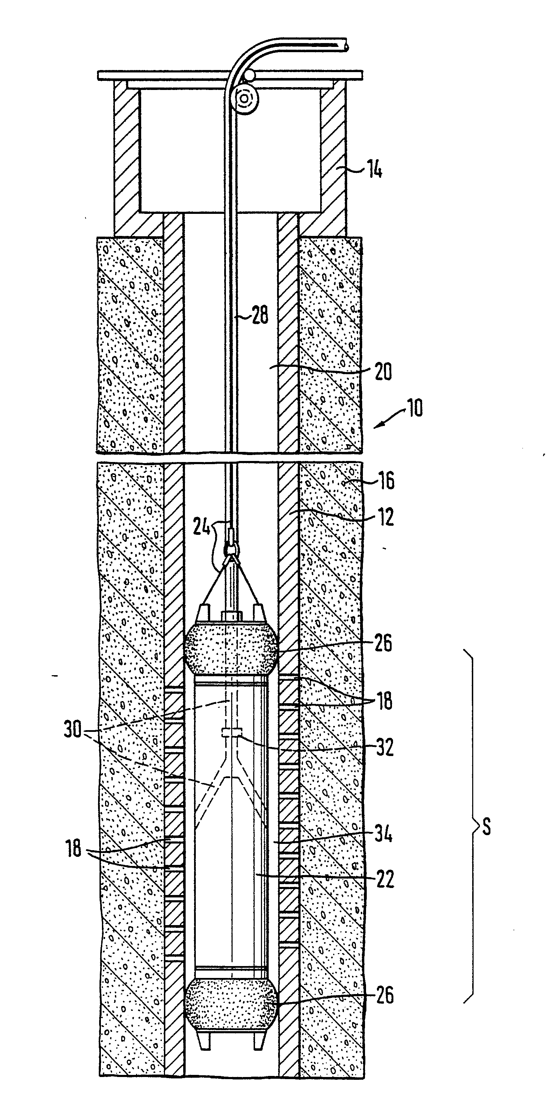

Die einzige Figur. zeigt eine schematische Schnittansicht durch einen Teil eines Trinkwasserbrunnens.

Der im Schnitt dargestellte Trinkwasserbrunnen (10) besteht im wesentlichen aus einem Brunnenrohr (12), an dessen oberem Ende sich das Brunnenbauwerk (14) befindet. Umgeben ist das Brunnenrohr (12) von einer Vielzahl von Filterkiesschichten, von denen die innerste Filterkiesschicht (16) von besonderer Bedeutung für das Sanierungsverfahren ist. Im Brunnenrohr (12) befinden sich über den Umfang verteilt und über die Länge, ggf. mit Unterbrechungen, Wassereindringschlitze (18), durch die das Grundwasser bzw. das Trinkwasser in das Innere (20) des Brunnens gelangen kann, von wo es nach oben durch eine nichtdargestellte Pumpe abgepumpt wird.

Das Sanierungsverfahren läuft wie folgt ab:

Zunächst einmal wird der Brunnenschacht ausgeräumt. Insbesondere wird das Pumpenaggregat samt Leitungen entfernt. Dann wird mittels einer Fernsehkamera die Schadstelle oder es werden mehrere Schadstellen festgestellt. Daraufhin wird ein jeweils angepaßter Packer (22) mittels einer Aufhängvorrichtung in den Brunnenschacht (22) abgelassen, bis er sich im Bereich der Schadstelle (S) befindet. Dort werden aufblasbare Abdichtbälge (26) aufgeblasen, um den Brunnenschacht im Bereich der Schadstelle abzudichten. Nun wird über einen Mörtelschlauch (28) und die Zuführleitungen (30) innerhalb des Packers, gesteuert durch ein Ventil (32), Mörtel in einen Ringraum (34) geleitet, der zwischen Packer und Brunnenrohr (12) ausgebildet ist. Von dort gelangt der Mörtel durch die Schlitze (18) in die Filterkiesschicht, und zwar gegen den Druck des eindringenden Grundwassers, jeweils in Abhängigkeit von dem jeweilig wirkenden statischen Druck. Durch den gegenwirkenden statischen Druck erfolgt eine gleichmäßige Verteilung des Mörtels in der Kiesfilterschicht.

Der Mörtel ist so in seiner Viskosität eingestellt und hat eine solche Topfzeit, daß der Mörtel gut und unbehindert in die Filterkiesschicht gelangen und sich dort verteilen kann. Sobald die entsprechende Verteilung erfolgt ist, erfolgt ein Aufschäumen des Mörtels gegen den Wasserdruck und dann innerhalb einer Minute ein Früherstarren des Mörtels, so daß die Schaumbildung gebremst wird. Dabei entsteht ein den Filterkies einschließender, geschlossenzelliger Feinschaum, der hinter der Schadstelle des Brunnenrohres eine Art Betonschicht ausbildet, die eine ausreichende Festigkeit hat, aber nach wie vor noch wasserdurchlässig ist. Dies gilt ebenso für die Materialausbildung innerhalb der Schlitze.

Nach Ablauf einer gewissen Zeit wird dann der Packer nach dem Zusammenziehen der Bälge aus dem Brunnenschacht herausgenommen, und zwar unter Belassung einer vom genannten Ringraum (34) herrührenden Innenschicht, die aber, wie ausgeführt, wasserdurchlässig ist. Danach erfolgt das Reinigen der Geräte und ein erneuter Einsatz.

Der verwendete Mörtel hat folgende Zusammensetzung:

A.

Tonerdeschmelzzement   50 - 80 Gewichtsteile
vorzugsweise        55 - 65 Gewichtsteile
am Beispiel        60 Gewichtsteile

B.

Portlandzement 45F (DIN 1164)      160 - 190 Gewichtsteile
mit einem $G_3A$-Gehalt von = 8 Gew.-%
vorzugsweise       170 - 180 Gewichtsteile
am Beispiel       180 Gewichtsteile

C.

Aluminiumpulver
(Gasbetontype / verzögert)   1 - 4 Gewichtsteile
vorzugsweise       2 - 4 Gewichtsteile
am Beispiel       3 Gewichtsteile

D.

Melaminformaldehydharz 0,5 - 1,5 Gewichtsteile
vorzugsweise       0,8 - 1,2 Gewichtsteile
am Beispiel       1 Gewichtsteile

E.

Quarzsand (gem. ISO-RILEM)
max. Korngröße 2 mm
min. Korngröße 0,08 mm
mit stetiger Sieblinie
zwischen 0,08 mm - 2mm   1100 - 1500 Gewichtsteile
vorzugsweise       1200 - 1400 Gewichtsteile
am Beispiel       1350 Gewichtsteile Man kann den Rohstoff (E) auch weglassen, und den Filterkies, der am Objekt vorliegt, mit dem Gemisch der Rohstoffe (A) bis (D) binden.

Wenn ein Aufschäumvorgang in sehr großer Tiefe erfolgt und ein hoher statischer Wasserdruck entgegensteht, der möglicherweise den Aufschäumvorgang behindern könnte, so kann dort unmittelbar am Ort der Aufschäumvorgang eingeleitet werden durch eine Einspülung von 3%-iger Perhydrollösung ($H_2O_2$). Dadurch erfolgt dann ein sekundenschnelles Aufschäumen.

Anhand eines besonderen Brunnens von 17 m Tiefe erfolgte die Durchführung eines besonderen Beispieles. Dabei wurden die Rohstoffe so im einzelnen aufeinander abgestimmt, daß die Topfzeit, der Erstarrungsbeginn, das Aufschäumverhalten und die Festigkeiten in einem ganz bestimmten Verhältnis zueinander gebracht wurden. Die Mischung wurde mit einer Menge von 230 ml/kg Mischung Wasser angeteigt. Der Rohstoff (D) führte dann zu einer sehr dünnen Konsistenz, die über 50 m mit herkömmlichen Aggregaten pumpbar ist.

Nach 1 Minute begann zwischen dem Rohstoff (C) und dem freiwerdenden Ca(OH)₂ aus dem Rohstoff (B) eine Reaktion, die Wasserstoffgas freisetzte und das Gesamtgemisch auseinadertrieb. Die Volumenvergrößerung lag beim Aufschäumen bei 1 Raumteil : 1 Raumteil.

Nach 5 Minuten bewirkte der Rohstoff (A) eine Früherhärtung, so daß das Gemisch nach dem Durchtritt durch die Schlitze des Brunnenrohres erstarrte und somit nicht durchsacken konnte.

2 Stunden nach dem Ende der Erstarrungszeit, d.h. bei 2 Std. und 15 Minuten, beßaß das Material eine Druckfestigkeit von 0,5 MPa. In dieser Zeit, also 15 Minuten nach dem Anmachen bis maximal 2 Std., konnte der HDPE-Packer (22) aus dem Brunnenschacht herausgezogen werden.

## Ansprüche

1. Verfahren zum Sanieren eines Brunnens, insbesondere eines Trink-oder Brauchwasserbrunnens, indem eine Schadstelle festgestellt und anschließend die Sanierung der Schadstelle efolgt, dadurch **gekennzeichnet**, daß Sanierungsmaterial zur Schadstelle gebracht wird und nur in der Nähe der Schadstelle durch bereits im Brunnenrohr vorhandene Wassereindringschlitze gegen den statischen Druck des eindringenden Grundwassers in eine das Brunnenrohr umgebene Filterkiesschicht gepreßt wird.

2. Verfahren nach Anspruch 1, dadurch **gekennzeichnet**, daß das Sanierungsmaterial nach dem Einpressen in die Filterkiesschicht aufgeschäumt und zum Bremsen des Aufschäumvorganges eine Früherstarrung eingeleitet wird. so daß ein den Filterkies einschließender, geschlossenzelliger, hydraulischer Feinstschaum entsteht.

3. Verfahren nach Anspruch 2, dadurch **gekennzeichnet**, daß das Aufschäumen und die Früherstarrung innerhalb von 60 Sekunden vorgenommen werden.

4. Verfahren nach Anspruch 2 oder 3, dadurch **gekennzeichnet**, daß die Volumenvergrößerung beim Aufschäumen bei 1 Raumteil : 1 Raumteil liegt.

5. Verfahren nach einem der Ansprüche 1 bis 4, dadurch gekennzeichnet, daß das Einpressen des Sanierungsmaterials und dessen Verbund mit der Filterkiesschicht so erfolgt, daß die entstandene Gesamtschicht noch wasserdurchlässig ist.

6. Verfahren nach einem der Ansprüche 1 bis 5,
dadurch **gekennzeichnet**, daß das Einpressen des Sanierungsmaterials und dessen Verbund mit der Filterkiesschicht so erfolgt, daß die Gesamtschicht mit einer Druckfestigkeit von 0,5 N/mm² (0,5 MPa) nach ca. 2 Stunden biegeweicher ist als Beton.

7. Verfahren nach einem der Ansprüche 2 bis 8,
dadurch **gekennzeichnet**, daß in großen Brunnentiefen das Aufschäumen des Sanierungsmaterials gegen einen relativ hohen statischen Wasserdruck am Ort gezielt sekundenschnell eingeleitet wird.

8. Verfahren nach Anspruch 7,
dadurch **gekennzeichnet**, daß das Einleiten des sekundenschnellen Aufschäumens durch Einspülen von 3%-iger Perhydrollösung (H₂O₂) erfolgt.

9. Verfahren nach einem der Ansprüche 1 bis 8,
dadurch **gekennzeichnet**, daß die Topfzeit, der Erstarrungsbeginn und das Aufschäumverhalten des Sanierungsmaterials so eingestellt werden, daß das Sanierungsmaterial gut in Pumpe und Leitungen handhabbar und gut durch die Brunnenschlitze fließbar ist, daß die Erstarrung als Früherstarrung nach dem Eindringen des Sanierungsmaterials in den und nach dem Verteilen desselben in der Filterkiesschicht und ebenfalls nach einem ausreichenden Aufschäumen erfolgt, und zwar ohne Behinderung des Aufschäumens, aber auch bei Verhinderung eines zu starken Aufschäumens und einer zu grobporigen Schaumbildung.

10. Mörtel, insbesondere für die Verwendung für das Verfahren zur Brunnensanierung gemäß einem oder mehreren der Ansprüche 1 bis 9, wobei der Mörtel folgende Zusammensetzung hat:
(A) Tonerdeschmelzzement          50 - 80 Gew.-Teile
(B) Portlandzement mit einem C₃A-Gehalt von = 8 Gew.-%          160 - 190 Gew.-Teile
(C) Aluminiumpulver vom verzögerten Gasbetontyp          1 - 4 Gew.-Teile
(D) Melaminformaldehydharz          0,5 - 1,5 Gew.Teile.

11. Mörtel nach Anspruch 10, mit folgender Zusammensetzung:
(A) Tonerdeschmelzzement          55 - 65 Gew.-Teile
(B) Portlandzement mit einem C₃A-Gehalt von = 8 Gew.-%          170 - 180 Gew.-Teile
(C) Aluminiumpulver vom verzögerten Gasbetontyp          2 - 4 Gew.-Teile
(D) Melaminformaldehydharz          0,8 - 1,2 Gew. Teile.

12. Mörtel nach Anspruch 10 oder 11, mit der Zusammensetzung:
(A) Tonerdeschmelzzement          60 Gew.-Teile

(B) Portlandzement mit einem C₃A-Gehalt von = 8 Gew.-%          180 Gew.-Teile
(C) Aluminiumpulver vom verzögerten Gasbetontyp          3 Gew.-Teile
(D) Melaminformaldehydharz          1 Gew. Teil.

13. Mörtel nach einem der Ansprüche 10, 11 oder 12, der außer der Zusammensetzung nach Anspruch 10, 11 oder 12 noch enthält:
(E) Quarzsand (gem. ISO-RILEM)          1100 - 1500 Gew.-Teile
max. Korngröße 2 mm
min. Korngröße 0,08 mm
mit stetiger Sieblinie zwischen 0,08 mm - 2 mm.

14. Mörtel nach Anspruch 13,
dadurch **gekennzeichnet**, daß die Komponente (E) mit 1200 - 1400 Gew.-Teilen enthalten ist.

15. Mörtel nach Anspruch 13 oder 14,
dadurch **gekennzeichnet**, daß die Komponente (E) mit 1350 Gew.-Teilen enthalten ist.

0 266 792